(19) Europäisches Patentamt

European Patent Office

Office européen des brevets

(11) Veröffentlichungsnummer: **0 341 490 B1**

# (12) EUROPÄISCHE PATENTSCHRIFT

(45) Veröffentlichungstag der Patentschrift:
25.09.91 Patentblatt 91/39

(21) Anmeldenummer: 89107530.1

(22) Anmeldetag: 26.04.89

(51) Int. Cl.⁵: **C02F 1/52**

---

(54) Verfahren zur Chromausfällung aus Gerbereiabwässern.

---

Die Akte enthält technische Angaben, die nach dem Eingang der Anmeldung eingereicht wurden und die nicht in dieser Patentschrift enthalten sind.

(30) Priorität: 10.05.88 DE 3815948

(43) Veröffentlichungstag der Anmeldung:
15.11.89 Patentblatt 89/46

(45) Bekanntmachung des Hinweises auf die Patenterteilung:
25.09.91 Patentblatt 91/39

(84) Benannte Vertragsstaaten:
DE ES FR IT

(56) Entgegenhaltungen:
EP-A- 0 003 862
CHEMICAL ABSTRACTS, Band 107, Nr. 16, 19 Oktober 1987, Columbus, OH (US); D.I.CO-STAS et al., S. 113, Nr. 136253v, Columbus, Ohio, US; D.I. COSTAS etal.: "Recovery of basic chromium salts from tannery effluents", & IND: USOARA 1986, 33(10), 446-8

(73) Patentinhaber: BAYER AG
W-5090 Leverkusen 1 Bayerwerk (DE)

(72) Erfinder: Block, Hans-Dieter, Dr.
Biesenbach 49
W-5090 Leverkusen 3 (DE)
Erfinder: Makowka, Bernd, Dr.
Leuchter Gemark 1
W-5060 Bergisch-Gladbach 2 (DE)
Erfinder: Rosentreter, Helga
Willi Baumeisterstr. 7
W-5090 Leverkusen (DE)
Erfinder: Wardas, Adam, Dipl.-Ing.
Wilhelmstr. 7
W-5000 Köln 90 (DE)
Erfinder: Wehling, Bernhard, Dr.
Im Vogelsang 5
W-5060 Bergisch-Gladbach (DE)
Erfinder: Lönhoff, Norbert, Dr.
Paul Klee-Str. 60
W-5090 Leverkusen (DE)

## Beschreibung

Die wachsenden Anforderungen der Behörden und staatlichen Organe hinsichtlich des Schwermetallgehaltes in Abwässern und den daraus in biologischen Kläranlagen gebildeten Klärschlämmen haben auch das Chrom sowohl in dreiwertiger wie in sechswertiger Form in die Reihe der zu entfernenden Substanzen geführt, wenn auch von verschiedener Seite, insbesondere von den Lederforschungsinstituten, darauf hingewiesen wurde, daß unter normalen Umständen dreiwertiges Chrom kaum giftig ist. Um diese Forderungen der zuständigen Behörden erfüllen zu können, sind große Anstrengungen von der Lederindustrie, den Gerbereien und den Gerbstoffhrstellern unternommen worden, die Abgabe von Chrom mit den Gerbereiabwässern zu vermindern. Dieses ist einerseits geschehen durch die Entwicklunf von Fällungsverfahren, mit deren Hilfe das in den Gerbereiabwässern praktisch ausschließlich enthaltene dreiwertige Chrom ausgfällt und in fester, aufkonzentrierter, deponierbarer oder in begrenztem Umgang wiedervenwendbarer Form isoliert werden kann, andererseits durch die Entwicklung neuer hochauszehrender Gerbverfahren mit speziellen Chromgerbstoffen, bei deren Anwendung das Gerbereiabwasser nur noch einen Bruchteil des normalerweise enthaltenen Chroms aufweist ((1) W. Luck, B. Wehling, Leder- und Häutemarkt 37, 15, 30-38 (1985) und dort zitierte Literatur ; (2) B. Wehling, W. Luck, H. Rosentreter, Das Leder 37, 142-149 (1986) ; (3) Baychrom C-Verfahren, Broschüre der Bayer AG, Leverkusen, Best.-Nr. AC 11001).

Für eine Ausfällung des Chroms aus den Gerbereiabwässern ist die Forderung zu stellen, das Chrom weitgehend als ein Chrom(III)hydroxid-Präzipitat mit hohem Chrom-Gehalt und niedrigem Gehalt an anderen Begleitstoffen zu erhalten. Das ist erforderlich sowohl um eine möglichst kleine zu deponierende Menge Abfallstoff zu erhalten wie auch um keine oder jedenfalls möglichst wenige störende Fremdstoffe in die bei Wiederverwendung daraus herzustellenden Chromchemikalien (Gerbstoffe und Chrom(III)-Salze durch Auflösung in Säuren, Chromate durch alkalischen oxidierenden Aufschluß z.B. in der Schmelze oder in Lösung) einzubringen.

Die gesonderte, von den Abwässern der Wasserwerkstatt separierte Behandlung der Chrom enthaltenden Abwässer aus der Chromgerbung (sog. Restflotte), aus der Abwelk- und Abtropfflotte, aus den Neutralisier- und Spülwässern, aus der Nachgerbflotte und Waschflotte, gegebenenfalls noch verdünnt durch Abwässer nachgeschalteter Prozesse ist ebenso wie die Abtrennung fester Partikel vor der Chromhydroxid-Fällung als Voraussetzung zur Erreichung dieses Zieles bereits erkannt worden (J.S.A. Langerwerf, J.C. de Wijs, Das Leder 28, 1-8 (1977) ; I. Emuanuelsson, C.E. Persson, S. Horrdin, Das Leder 32, 125-131 (1981)). Für die Fällung des Chromhydroxids sind verschiedene basische Abstumpfmittel vorgeschlagen worden und im Einsatz, z.B. Natronlauge, Natriumcarbonat, Natriumbicarbonat, Calciumoxid z.B. als Kalkmilch, Magnesiumhydroxid, Magnesiumhydroxidcarbonat, Magnesiumoxid, gebrannter Dolomit, Ammoniak und Kalilauge.

Diese Mittel sind aber bei genauerer Betrachtung keineswegs alle gleich gut geeignet. Nur von Calcium freie Abstumpfmittel führen zu Niederschlägen, die im wesentlichen frei sind von Calciumsulfat und daher gut wiederverwendbar. Carbonat-haltige Abstumpfmittel entwickeln einen Kohlendioxid-Schaum, der durch Inhaltsstoffe der Gerbrestflotte häufig stabilisiert wird und daher einem zügigen Arbeiten im Wege steht. Ammoniak führt zu äquimolaren, hohen Ammonium-Gehalten im Abwasser, schafft also ein neues unerwünschtes Problem. Alkalimetallhydroxide scheinen zunächst die idealen Abstumpfmittel zu sein, da sie keine toxischen oder die Zusammensetzung des Niederschlages schädigende Kationen einbringen ; allerdings führen sie sehr schnell zu einer stark alkalischen Reaktion der Lösung, wenn die Dosierung nicht sehr genau, langsam und unter steter Kontrolle vorgenommen wird, und selbst dann wird die damit behandelte Lösung lokal stark alkalisch. Diese stark alkalische Reaktion hat dann eine erneute Auflösung und Peptisierung des Niederschlages von Chromhydroxid zur Folge und führt zugleich zur raschen Oxidation des Chrom(III) zum hochtoxischen Chrom(VI) durch den Luftsauerstoff. Für basische Magnesiumchemikalien treffen alle diese Einwände nicht zu.

Andere zu gut filtrierbaren und von Copräzipitaten freie Chromhydroxid-Niederschlägen führende Fällungsmittel, die aus der Literatur bekannt sind wie Ammoniumsulfid, Ammoniumcarbonat u. -carbaminat, Urotropin u. alkalisch reagierende Salze schwacher organischer Säuren scheiden schon deshalb aus, weil sie in das zu reinigende, von Chrom zu befreiende Abwasser unerwünschte, neue Stoffe mit erhöhter Sauerstoffzehrung einbringen ; dadurch werden die nachgeschaltete Kläranlage und/oder das aufnehmende Gewässer weiteren erhöhten Belastungen ausgesetzt.

Es ist bekannt, daß Makierungsmittel die Ausfällung des Chromhydroxids verzögern sowie einen höheren pH-Wert und einen größeren Zusatz an Abstumpfmittel erfordern (L. Feikes in Bibliothek des Leders, Band 8, S. 66, Umschau-Verlag, Frankfurt a.M. 1983), die Fällung soll aber durch leichtes Erwärmen der Lösung eingeleitet werden können.

Mit den bisher verfügbaren Methoden ist es aber nicht möglich gewesen, durch Chrom(III)-hydroxid-Fällung den Restgehalt der Gerbstoffe an Chrom(III) vor Eintritt in die nächste Reinigungsstufe oder in die nächste Verdünnungsstufe unter 1 mg/l zu senken. So konnten J.S.A. Langerwerf und J.C. de Wijs durch Fällung von Maskierungsmittel Formiat enthaltenden Chromrestlaugen, die zwischen 5 und 10 g/l $Cr_2O_3$ enthielten, mit Magnesiumoxid nur Chrom-Restgehalte von 1-5 mg/l erreichen, der Filterkuchen enthielt ca. 10% $Cr_2O_3$ im feuchten Zustand. Die Fällung erwies sich als äußerst langwierig, erst nach mehreren Stunden sank der Chrom-Gehalt under 5 mg/l.

Auch I. Emanuelsson, C.E. Persson, S. Horrdin (Das Leder 32, 125-131 (1981) erreichten durch Fällung von Chromhydroxid aus konventionellen Gerberei-Restflotten mit Magnesiumoxid bei pH-Werten über 9 Chrom-Restgehalte im Filtrat von 3-40 mg/l. Die Flockenbildung setzte erst nach mehreren Stunden ein, durch Zusatz eines Flockungsmittels wurde keine wesentliche Beschleunigung erreicht. Eine Fällung bei höherer Temperatur mit Natriumcarbonat, die ebenfalls versucht wurde, brachte offensichtlich keine günstigeren Resultate, verbesserte allenfalls die Sedimentationseigenschaften. Darüber hinaus stellen die Autoren fest, daß bei Chromgehalten von weniger als 1,5 g/l in der Restflotte eine künstliche Erhöhung des Chrom-Gehaltes auf über diesen Wert erforderlich ist, um überhaupt eine Ausfällung zu erreichen.

Ein anderer vorgeschlagener Prozeß (US-Patent 3950131, Erf. H.H. Young) vermag zwar den Chrom-Restgehalt in den konventionellen Gerberei-Restflotten bis auf ca. 1 mg/l zu senken, führt aber zu einer äußerst schwer filtierbaren thixotropen Suspension von Chromhydroxid, die Filtration ist nur in speziellen Multi-Segment-Filtern in langen Zeiten möglich.

Zu einem besser filtrierbaren und wieder auflösbaren Chromhydroxid führt das Verfahren der US-Patentschrift 4560546, welches den Zusatz von mindestens 0,3 % Essigsäure oder Acetat zu der zu behandelnden Lösung verlangt und die Fällung sodann mit einem alkalischen Material (Natriumhydroxid, Kaliumhydroxid, Ammoniak, Magnesiumoxid) bei pH-Werten über 6,5 und Temperaturen zwischen 40°C und Siedetemperatur vornimmt. Die Restgehalte an Chrom im Filtrat sollen unter 2 mg/l liegen. Es liegt auf der Hand, daß die in den angeführten Beispielen zugesetzten hohen Mengen an Essigsäure (3,3 Gew.-% der Lösung bzw. 0,6 Gew.-%) dem Ziel einer Abwasserreinigung zuwiderlaufen.

Das erfindungsgemäße Verfahren gestattet es, aus Gerberei-Restflotten mit einem Gehalt an maskierenden oder komplexierenden Mono- oder Polycarbonsäuren das Chrom bis auf Restgehalt unter 0,6 mg/l Chrom in der verbleibenden Lösung als gut filtrierbares, in Säuren zu über 99 % lösliches, von störenden Verunreinigungen weitgehend freies und wiederverwendbares Chromhydroxid dadurch auszufällen und wiederzugewinnen, daß die bezeichnete Gerberei-Restflotte bei Temperaturen oberhalb 40°C, vorzugsweise ab 50°C mit Magnesiumoxid auf einen pH-Wert von 8,2 bis 8,6 eingestellt und die resultierende Suspension nach Zusatz von 2-10 ppm eines anionischen Flockungs- und Filtrationshilfsmittels filtriert wird.

Das überraschendste an diesem Resultat ist, daß es erzielt werden kann mit Lösungen, die komplexierende Carbonsäuren enthalten. Ein künstlich hergestelltes Gerbflotten-Imitat, des in 1 l 1,0 g $Cr_2O_3$ als Chrom(III)sulfat, 22 g Natriumsulfat, 24 g Natriumchlorid, 1,2 g Borsäure und 0,17 g Mangan(II) als Mangansulfat enthält, scheidet beim Abstumpfen mit Magnesiumoxid bei 20°C ab pH 5.1 Chromhydroxid aus, ein Chrom(III)-Gehalt von 2 mg/l wird ab pH 7 nach eintägigem Stehen und Filtrieren erhalten. Ganz anders die gleiche Lösung nach Zusatz von 3 g Ameisensäure und 1,5 g Glutarsäure : die Fällung setzt erst bei erhöhtem pH-Wert ein und erst bei einem pH-Wert über 9,6 werden 2 mg/l Chrom im Filtrat unter obigen Bedingungen erreicht. Wird der Glutarsäurezusatz auf 11 g gesteigert, ist im gesamten überprüften pH-Bereich bis pH 10 eine weitgehende Ausfällung von Chromhydroxid nicht mehr möglich.

Diese Unzulänglichkeiten überwindet das erfindungsgemäße Verfahren.

Die Fällung wird oberhalb 40°C, vorzugsweise bei 50°C und darüber vorgenommen. Höhere Temperaturen als 60°C führen zu einem gleich guten Ergebnis bezüglich Chrom-Restgehalt und Qualität des Chromhydroxid-Präzipitats, doch spricht der geringere erforderliche Energie-Einsatz für eine bevorzugte Durchführung des Fällverfahrens nicht wesentlich oberhalb 60°C. In vielen Fällen, insbesondere bei Anwesenheit nur kleiner Konzentrationen an maskierenden bzw. komplexierenden Carbonsäuren, sind 40°C schon ausreichend, um unter den Bedingungen des erfindungsgemäßen Verfahrens Chrom-Restkonzentrationen unterhalb 1 mg/l zu erreichen, jedoch wird der Temperaturbereich ab 50°C bevorzugt, weil dann auch unter ungünstigen Randbedingungen das angestrebte Ergebnis einer Chromrestkonzentration unter 1 mg/l erreicht wird.

Das erfindungsgemäße Verfahren nutzt als Abstumpfmittel zur Ausfällung des Chromhydroxids nur Magnesiumoxid und sein Hydrat Magnesiumhydroxid. Damit werden eine Reihe von Vorteilen neben der guten Chromausfällung und der Bildung eines gut filrierbaren, wiederverwertbaren Präzipitats erreicht : Es werden keine störenden, toxischen oder das verbleibende Abwasser belastenden Anionen in die zu reinigende Lösung eingebracht. Die Einbringung des Fällmittels wird nicht durch Gasentwicklung und Schaumbildung gestört und verzögert. Mit den in der Lösung vorhandenen Anionen, z.B. Sulfat, bildet Magnesium keine schwer löslichen Salze, die die Menge an Präzipitat erhöhen und einen störenden Ballast darstellen. Die Gewichtsmengen an Magnesiumoxid bzw.- hydroxid, die zur Erreichung des pH-Bereiches, in dem eine fast vollständige Fällung des Chroms unter 1 mg/l erfolgt, vonnöten sind, sind kleiner als bei den anderen für die Chromhydroxid-Fällung zuvor empfohlenen Alkali- und Erdalkalimetalloxiden bzw. -hydroxiden.

Überraschend aber ist die wirksame Breite von Magnesiumoxid bzw. -hydroxid, in welcher Eigenschaft MgO und Mg(OH)$_2$ (MgO · H$_2$O) anderen Abstumpfmitteln überlegen ist. Unter wirksamer Breite ist zu verstehen das Verhältnis der Gewichtsmengen an Abstumpfmittel zur Erreichung des oberen geeigneten pH-Wertes 8,6 zu derjenigen zur Erreichung des unteren geeigneten pH-Wertes 8,2. Dieses Verhältnis ist bei Magnesiumoxid, bei 570°C calciniert, ca. 2,3 und 2,8 bei Magnesiumoxid, bei 1200°C calniniert ; bei Natonlauge beträgt das Verhältnis nur ca. 1,2. Das bedeutet, daß leichte Fehldosierungen z.B. bei Natronlauge sehr schnell in das unerwünschte, stärker alkalische Medium führen, während Magnesiumoxid auch bei größeren Schwankungen der Zugabe immer noch zu den gewünschten pH-Werten führen. Diese Eigenschaft erleichtert die Arbeit in den Gerbereien sehr und macht die Chromhydroxid-Fällung nach dem erfindungsgemäßen Verfahren zu einer einfachen, umkomplizierten und trotzdem sicheren Arbeitsweise.

Der einzustellende pH-Wert ist 8,2 bis 8,6 ; in diesem pH-Bereich wird bei Temperaturen von etwa 50°C und darüber die angestrebte Chromrestkonzentration von weniger als 1,0 mg/l Chrom sicher erreicht. Unter günstigen Umständen, d.h. bei kleinen Gehalten an komplexierenden Carbonsäure und Dicarbonsäuren und Temperaturen von 60°C und darüber wird dieses erwünschte Ergebnis manchmal auch schon bei etwas niedrigeren pH-Werten erreicht. Höhere pH-Wert als 8,6 stehen zwar der Ausfällung des Chroms auf Restkonzentrationen unter 1 mg/l nicht entgegen, doch ist dies aus Gründen der Abwasserqualität nicht erwünscht und wegen der erforderlichen höheren Mengen an Magnesiumoxid bzw. -hydroxid auch nicht wirtschaftlich.

Der Zusatz eines anionischen Flockungs- und Filtrationshilfsmittels ist vorteilhaft, um besser sich absetzende und besser filtrierbare Chromhydroxid-Flocken zu erhalten. Solche Produkte sind in der Regel polymere, Carboxylgruppen enthaltende organische Produkte, die für den Zweck der besseren Filtrierbarkeit und der Zusammenballung organischer und anorganischer Flocken in wäßriger Lösung seit längerem auch bei der Fällung von Chromhydroxid in Gebrauch sind.

Zur Erreichung des angestrebten Ziels der nahezu vollständigen Entfernung des Chroms aus den bezeichneten Gerbereirestflotten ist es unabdingbar, für eine geeignete Durchmischung des zu behandelnden Mediums mit den zugesetzten Fällungschemikalien zu sorgen und die geforderten Temperatur- und pH-Werte in der gesamten Reaktionsmischung einzustellen. Diese Durchmischung kann durch Rühren der Reaktionsmischung, durch Umpumpen, durch Einblasen von Gasen, z.B. Luft oder Wasserdampf und bei geeigneter Behälterkonstruktion auch durch den Auftrieb der erwärmten Lösung erfolgen.

Es ist selbstverständlich, daß durch das erfindungsgemäße Verfahren nur dreiwertiges Chrom aus den eingangs näher bezeichneten Gerberei-Restflotten entfernt werden kann. Es ist aber auch bekannt, daß im annähernd neutralen und erst recht im alkalischen Medium dreiwertiges Chrom durch anwesende Oxidationsmittel, unter geeigneten alkalischen Bedingungen sogar durch den Sauerstoff der Luft, in sechswertiges Chrom überführt werden kann. Es ist daher empfehlenswert, bei Anwesenheit von Oxidationsmitteln die Gerberei-Restflotte vor der Fällung mit einer ausreichenden Menge Reduktionsmittel wie Natriumbisulfit, Schwefeldioxid, Sulfid oder ähnlichen zu versetzen, um die Oxidationsmittel zu zerstören. Formiat kann ebenfalls ein geeignetes Reduktionsmittel sein.

Es ist selbstverständlich möglich, das erfindungsgemäße Verfahren der Entfernung von Chrom aus Gerberei-Restflotten nach Anwendung hochauszehrender Gerbverfahren mit anderen Verfahren zur Behandlung derartiger Abwässer zu kombinieren wie z.B. einer aeroben oder anaeroben biologischen Abwasserbehandlung. Diese Behandlungsmethoden führen durch Bindung des Chroms und anderer Inhaltsstoffe zu einer weiteren Senkung der Fracht an gelöstem Chrom im Abwasser. Darüber hinaus sinkt die Konzentration des Chroms nochmals deutlich durch das Zusammenführen mit anderen von Chrom freien Abwässern des Gerbereibetriebes oder anderer Abwasser-Emittenten.

Sofern aber auch unter Berücksichtigung dieser Effekte die mit dem erfindungsgemäßen Verfahren erreichbaren niedrigen Chrom-Restkonzentrationen unter extremen Umständen nicht ausreichend niedrig sein sollten, so kann z.B. durch eine Copräzipitation mit Aluminium oder mit Eisen aus den nach dem erfindungsgemäßen Verfahren erhaltenen Lösungen mit unter 1 mg/l Chrom der Chromgehalt nochmals drastisch abgesenkt werden. Wird zweiwertiges Eisen für diese Nachfällung eingesetzt, ist zugleich für eine vollständige Entfernung eventuell vorhandenen sechswertigen Chroms bis unter die Nachweisgrenze von ca. 0,01 mg/l gesort. Das bei diesem Schritt anfallende Eisenhydroxid mit sehr geringen Chromanteilen ist natürlich für eine Direktumwandlung in Chromgerbstoff durch Auflösen in Schwefelsäure ungeeignet.

Das bei der Durchführung des erfindungsgemäßen Verfahrens entstehende Chromhydroxid wird von der Restlösung durch Filtration oder Zentrifugation abgetrennt und zwecks Erzeugung eins mit möglichst wenig Fremdstoffen beladenen Chromhydroxids mit Wasser ausgewaschen.

Die Erfindung wird anhand der folgenden Beispiele näher erläutert.

Beispiel 1

Eingesetzt wurde eine Gerberei-Restflotte aus einer Gerbung mit hochauszehrendem, selbstbasifizierendem Chromgerbstoff. Die Restflotte wies einen pH-Wert 4,0 und nach dem Filtrieren folgende Zusammensetzung von Inhaltsstoffen auf (jeweils in g/l) :

| Chrom | 0,6 |
|---|---|
| Natrium | 22,9 |
| Magnesium | 0,6 |
| Calcium | 0,59 |
| Bor | 1,2 |
| Mangan | 0,078 |
| Eisen | 0,008 |
| Phosphor | 0,006 |
| Chlorid | 20,0 |
| Sulfat | 26,0 |
| Ameisensäure | 2,0 |
| Glutarsäure (techn.)*) | 2,3 |
| Kohlenstoff gesamt | 4,2 |
| Stickstoff gesamt | 0,64 |

Zu 1 l dieser Lösung wurde unter Rühren bei 60°C eine wäßrige Aufschlämmung von Magnesiumoxid (bei 570°

---

*) Summe aus Bernsteinsäure, Glutarsäure, Adipinsäure

calciniert) portionsweise innerhalb einer Stunde derart hinzugefügt, daß nach 20 Minuten ein pH-Wert 8,5 erreicht war, in den nächsten 40 Minuten wurde noch zweimal mit kleinen Portionen Magnesiumoxid der pH-Wert nachgestellt. Danach wurde die Lösung eine weitere Stunde schwach gerührt, 3 ppm eines als anionisches Fällungshilfsmittel wirkenden Acrylsäure-Acrylamid-Mischpolymers (Praestol A 335 Fl, Fa. Stockhausen in Krefeld) zugesetzt und die Reaktionsmischung nunmehr 16 Stunden stehen gelassen. Nach dem Filtrieren wies die Lösung einen Chromgehalt von 0,5 mg/l auf.

Beispiel 2

Eine Gerberei-Restflotte aus einer Gerbung mit hochauszehrendem, selbstbasifizierendem Gerbstoff mit einem pH-Wert 3,8 und einer Zusammensetzung der filtrierten Lösung wie folgt

| | | |
|---|---|---|
| Chrom | 0,7 | g/l |
| Natrium | 24,9 | g/l |
| Magnesium | 0,68 | g/l |
| Calcium | 0,60 | g/l |
| Aluminium | 0,03 | g/l |
| Mangan | 0,091 | g/l |
| Eisen | 0,003 | g/l |
| Chlorid | 21 | g/l |
| $V_2O_5$ | 0,002 | g/l |
| Gesamt-N | 0,75 | g/l |
| Ameisensäure | 2,8 | g/l |
| Glutarsäure (techn.) | 5,3 | g/l |

wurde in gleicher Weise wie die Lösung in Beispiel 1 behandelt, der eingestellte pH-Wert betrug 8,2 Nach 16 Stunden Standzeit wurde filtriert und im Filtrat ein Chromgehalt von 0,5 mg/l bestimmt.

Die Gehalte an anderen Ionen wurden bestimmt zu :

| | | |
|---|---|---|
| Natrium | 23,9 | g/l |
| Magnesium | 2,0 | g/l |
| Calcium | 0,50 | g/l |
| Mangan | 0,015 | g/l |
| Eisen | 0,0003 | g/l |
| Ameisensäure | 2,5 | g/l |
| Glutarsäure (techn.) | 4,6 | g/l |

In dem zweifach ausgewaschenen und bei 110°C getrockneten filterkuchen beträgt der Anteil an

| | | |
|---|---|---|
| $Cr_2O_3$ | 20,6 | % |
| MgO | 18,5 | % |
| CaO | 3,5 | % |
| $Fe_2O_3$ | 1,2 | % |
| $MnO_2$ | 2,4 | % |
| $Al_2O_3$ | 0,19 | % |
| $V_2O_5$ | 0,009 | % |
| Glutarsäure (techn.) | 1,8 | % |
| Ameisensäure | 0,14 | % |
| Chlorid | 0,21 | % |
| Stickstoff-Gesamt | 0,1 | % |

Ergebnis :

Wird die Fällung des Chromhydroxids nach dem erfindungsgemäßen Verfahren vorgenommen, so gelangen nahezu ausschließlich Stoffe in den Filterkuchen, die bei einer Wiedereinschleusung in den Chromerzaufschluß entweder unter Abgabe von Verbrennungsenergie vollständig verbrennen oder aber sowieso im Roherz vorhanden sind und bei der anschließenden Laugung des Ofengutes (Aufschlußmasse) quantitativ im unlöslichen und verworfenen Rückstand sammeln. Dagegen werden diejenigen Inhaltsstoffe der Restflotte, die, falls sie im Ofengut vorhanden sind, in die Chromat-Lösung wandern und hernach aufwendig daraus entfernt werden müssen, z.B. Chlorid, Vanadat, Nitrit, Nitrat (aus verschiedenen N-Spezies gebildet), praktisch nicht in den Chromhydroxid-Niederschlag aufgenommen.

Beispiel 3

Dem gleichen Vorgehen wie die Gerberei-Restflotte in Beispiel 1 wurde eine weitere typische Restflotte aus einer Gerbung nach einem hochauszehrenden, selbstbasifizierenden Gerbverfahren unterworfen. Die Zusammensetzung der wichtigsten Komponenten ist :

| | | |
|---|---|---|
| Chrom | 0,7 | g / l |
| Natrium | 26,5 | g / l |
| Magnesium | 0,67 | g / l |
| Calcium | 0,64 | g / l |
| Mangan | 0,085 | g / l |
| Eisen | 0,005 | g / l |
| Ameisensäure | 2,7 | g / l |
| Glutarsäure (techn.) | 1,3 | g / l |
| Chlorid | 21 | g / l |
| Sulfat | 23 | g / l |

Der pH-Wert wurde auf 8,5 eingestellt. Im Filtrat betrug der Chromgehalt 0,4 g/l.
Gehalte anderer Bestandteile im Filtrat :

| | | |
|---|---|---|
| Natrium | 26,5 | g / l |
| Magnesium | 1,7 | g / l |
| Calcium | 0,59 | g / l |
| Ameisensäure | 2,4 | g / l |
| Glutarsäure (techn.) | 1,0 | g / l |

In dem ausgewaschenen und bei 110°C getrockneten Filterkuchen betragen die Anteile von

| | | |
|---|---|---|
| $Cr_2O_3$ | 26,4 | % |
| MgO | 17,2 | % |
| CaO | 3,7 | % |
| Glutarsäure (techn.) | 1,5 | % |
| Chlorid | 0,1 | % |
| Stickstoff-Gesamt | 0,1 | % |
| Sulfat | 1,6 | % |

Beispiel 4

In der gleichen Vorgehensweise wie im Beispiel 1, wobei der pH-Wert auf 8,6 bei 50°C eingestellt wird, ergibt sich für eine Gerberei-Restflotte der Zusammensetzung

| Chrom | 0,3 | g/l |
|---|---|---|
| Natrium | 20,4 | g/l |
| Magnesium | 2,8 | g/l |
| Calcium | 0,62 | g/l |
| Mangan | 0,17 | g/l |
| Eisen | 0,005 | g/l |
| Sulfat | 31,1 | g/l |
| Ameisensäure | 3,2 | g/l |
| Glutarsäure (techn.) | 10,7 | g/l |
| Stickstoff-Gesamt | 0,5 | g/l |
| pH-Wert | 4,3 | |

eine Chrom-Restgehalt von 0,5 mg/l.

Beispiel 5-9 und Vergleichsbeispiele 10 und 11

Eingesetzt wurde eine Gerberei-Restflotte aus einer Gerbunf mit hochauszehrendem, selbstbasifizierendem Chromgerbstoff. Diese Restflotte wies winen pH-Wert 4,0 und nach dem Filtrieren folgende Zusammensetzung von Inhaltsstoffen auf (jeweils in g/l) :

| Cr | 0,6 |
|---|---|
| Na | 22,9 |
| Mg | 0,6 |
| Ca | 0,59 |
| B | 1,2 |
| Mn | 0,078 |
| Fe | 0,008 |
| P | 0,006 |
| $Cl^-$ | 20,0 |
| $SO_4^{2-}$ | 26,0 |
| HCOOH | 2,0 |
| Glutarsäure (techn.)[*] | 2,3 |
| C gesamt | 4,2 |
| N gesamt | 0,64 |

[*] Summe aus Bernsteinsäure, Glutarsäure, Adipinsäure

8

Die Lösung ist identisch mit der in Beispiel 1 verwendeten.

Bei Fällung mit dem erfindungsgemäß zu verwendenden Magnesiumoxid bzw. seinem Hydrat werden im pH-Bereich 8-9 wesentlich kleinere Sedimentvolumina als bei Fällung mit Natronlauge erhalten :

Jeweils 1 l der bezeichneten Restflotte wird auf 60°C erwärmt und innerhalb 30 Minuten portionsweise mit den in der Tabelle aufgeführten Fällungschemikalien versetzt, bis der pH-Wert 8,0 (Versuche 5, 7, 8, 10) bzw. pH-Wert 9,0 (Versuche 6, 9, 11) erreicht ist. Danach werden 3 ppm eines als anionisches Fällungshilfsmittel wirkenden Acrylsäure-Acrylamid-Mischpolymers (Praestol A 335 FL, Fa. Stockhausen in Krefeld) zugesetzt und die Reaktionsmischungen stehen gelassen. Nach 16 Stunden werden die Volumina der gebildeten Sedimente von ausgeflocktem Chromhydroxid abgelesen.

Ergebnis :

Basische Magnesium-Fällungschemikalien führen zu einem dichteren, besser absitzenden Niederschlag als Alkalihydroxide.

| Beisp.-Nr. | Fällungsmittel | pH | Sedimentvolumen in ml / l Lösung |
|---|---|---|---|
| 5 | Magnesiumoxid bei 570° calciniert | 8,0 | 320 |
| 6 | Magnesiumoxid bei 570° C calciniert | 9,0 | 380 |
| 7 | Magnesiumoxid bei 1200° C calciniert | 8,0 | 305 |
| 8 | Magnesiumhydroxid | 8,0 | 350 |
| 9 | Magnesiumhydroxid | 9,0 | 330 |
| 10 | Natriumhydroxid | 8,0 | 600 |
| 11 | Natriumhydroxid | 9,0 | 780 |

### Beispiele 12-14, Vergleichsbeispiel 15

Die Überlegenheit der Magnesiumoxide bzw. -hydroxide für den erfindungsgemäßen Zweck besteht in den niedrigen erforderlichen Mengen, um den angestrebten pH-Wert zu erreichen :

Jeweils 1 l der in Beispiel 1 näher bezeichneten Restflotte wird portionsweise unter Rühren bei 50°C mit den in der nachstehenden Tabelle aufgeführten basischen Magnesiumoxiden und -hydroxiden versetzt und dabei wird die zur Erreichung bestimmter pH-Werte notwendige Menge Magnesiumchemikalie in Gramm registriert.

| Beisp.-Nr. | Fällungsmittel | pH 7,8 | pH 8,2 | pH 8,6 | pH 9,0 |
|---|---|---|---|---|---|
| 12 | Magnesiumoxid bei 570°C calciniert | 1,2 | 1,8 | 4,2 | 9,6 |
| 13 | Magnesiumoxid bei 1200° calciniert | 1,0 | 1,4 | 3,9 | 18,0 |
| 14 | Magnesiumhydroxid | 1,1 | 1,8 | 2,9 | 7,9 |
| 15 | Magnesiumhydroxidcarbonat $Mg(OH)_2 \times 4\ MgCO_3$ | 4,65 | 32,0 | nicht erreicht | nicht erreicht |

Ergebnis :

Im pH-Bereich 7,8 bis 8,6 weisen Magnesiumoxid und Magnesiumoxidhydrat ($Mg(OH)_2$ einen vorteilhaften, niedrigen spezifischen Chemikalienbedarf für die Einstellung gewünschter Fällungs-pH-Werte für Chromhydroxid auf.

Vergleichsbeispiel 16

Unter Beibehaltung der Randbedingungen von Beispielen 12-15 wird die Ausfällung des Chromhydroxids mit Natronlauge vorgenommen und die zum Erreichen der pH-Werte 7,8 und 8,6 erforderliche Menge NaOH (100 %ig) pro 1 l Restflotte registriert

pH 7,8     pH 8,6
3,8 g NaOH    5,8 g NaOH

Ergebnis :

Zur Einstellung der Fällungs-pH-Were in Gerbrestflotten mit maskierenden Carbonsäuren erfordert der Einsatz von Natronlauge höhere Zugaben als der Einsatz von Magnesiumoxid(hydrat). Besonders im untern pH-Bereich wird Natriumhydroxid offensichtlich in hohem Maße vom Präzipitat gebunden.

Beispiel 17-23 (Vergleichsbeispiele)

In den Beispielen 17-23 wird gezeigt, daß in dem für Chromhydroxid-Fällungen mit Alkalimetall- und Erdalkalimetalloxiden und -hydroxiden bisher herangezogenen Temperaturbereich, für den hier stellvertretend 20-25°C gewählt wurden, eine befriedigende Entfernung des Chroms nicht möglich ist. Teilmengen von jeweils 1 l der in Beispiel 1 näher beschriebenen Gerberei-Restflotte werden portionsweise unter Rühren innerhalb 30 min mit einer Aufschlämmung von Magnesiumoxid (bei 570°C calciniert) auf die in nachstehender Tabelle genannten pH-Wert eingestellt. Danach werden 3 ppm eines als anionisches Fällungshilfsmittel wirkenden Acrylsäure-Acrylamid-Mischpolymers (Praestol A 335 Fl, Fa. Stockhausen in Krefeld) zugesetzt und die Mischungen 16 Stunden stehen gelassen. Die Bestimmung des in Lösung verbliebenen Chroms in der über dem Sediment stehenden flüssigen Phase ergibt folgende Werte :

| Beispiel-Nr. | pH-Wert | Chrom-Konzentration in mg/l |
|---|---|---|
| 17 | 7,9 | *) |
| 18 | 8,2 | *) |
| 19 | 8,5 | 45 |
| 20 | 8,8 | 32 |
| 21 | 9,0 | 19 |
| 22 | 9,3 | 11 |
| 23 | 9,8 | 5,5 |

*) Flüssige Phase ist noch blau-grün gefärbt.

Ergebnis :

Beim diesem Temperaturen ist es im gesamten pH-Bereich bis hinaus zu pH 9,8 nicht möglich, den Chrom-Restgehalt ausreichend abzusenken.

Vergleichsbeispiele 24-26 und Beispiele 27-29

Die folgenden Beispiele belegen überzeugend, daß für eine Ausfällung des Chroms aus Gerberei-Restflotten, die das Chrom maskierende Carbonsäure enthalten, erhöhte Fällungstemperaturen vonnöten sind.

Je 1 l der in Beispiel 1 näher bezeichneten Gerberei-Restflotte werden portionsweise unter Rühren innerhalb 30 min mit einer wäßrigen Aufschlämmung von 2,3 g Magnesiumoxid (bei 570°C calciniert) bei den in der nachstehenden Tabelle genannten Temperaturen versetzt. Danach werden 3 ppm Praestol A 335 FL hinzugefügt, die Mischungen 16 Stunden stehen gelassen und anschließend filtriert. Die Bestimmung der Chromgehalte und der pH-Werte im Filtrat ergibt folgende Werte :

| Beispiel-Nr. | Fällungstempe-ratur in °C | pH-Werte | Chrom-Rest-gehalt in mg/l |
|---|---|---|---|
| 24 | 22 | 9,1 | 8,8 |
| 25 | 30 | 9,0 | 5,1 |
| 26 | 35 | 8,7 | 1,1 |
| 27 | 40 | 8,5 | 0,5 |
| 28 | 50 | 8,4 | 0,5 |
| 29 | 60 | 8,1 | 0,4 |

EP 0 341 490 B1

Ergebnis :

Nur durch Erhöhen der Fällungstemperaturen auf 40°C und darüber ist es möglich, Chrom als Chromhydroxid auf Restgehalte von unter 1 mg/l in der Lösung aus solchen Lösungen auszufällten, die auch das Chrom maskierende Carbonsäure enthalten. Nur unter diesen Temperaturbedingungen wird die durch Magnesiumoxid oder -hydroxid eingebrachte Alkalität für die Chromhydroxid-Fällung genutzt.

Beispiel 30 und 31

Je 1 l der in Beispiel 1 näher bezeichneten Gerberei-Restflotte werden portionsweise unter Rühren innerhalb 30 min. mit einer Aufschlämmung von Magnesiumoxid (bei 570°C calciniert) bei 90°C Lösungstemperatur versetzt, bis der pH-Wert 8,5 erreicht ist. Nach einer weiteren halben Stunde Rühren werden den Lösungen 3 ppm Praestol A 335 FL hinzugesetzt und die Lösungen bei 90°C stehen gelassen. Die nach zwei weiteren Stunden abfiltrierte Lösung weist einen pH-Wert 8,43 und einen Chromgehalt von 0,4 mg/l auf. Die andere, erst nach 48 Stunden filtrierte Lösung hat dann einen pH-Wert 8,11 und einen Chromgehalt von 0,4 mg/l.

Beispiel 32-49

In 4 Versuchsreihen wurden jeweils eine 1 l Gerberei-Restflotte der in Beispiel 2 bezeichneten Art bei 20°C, 30°C, 40°C, 50°C und 60°C durch portionsweise Zugabe einer wäßrigen Aufschlämmung von Magnesiumoxid (bei 570°C calciniert) innerhalb 60 Minuten auf die pH-Werte 8,0 bzw. 8,5 bzw. 9,0 bzw. 9,5 eingestellt. Nach einer weiteren Stunde Nachrühren wurden 3 mg eines schwach anionischen Fällungshilfsmittels hinzugefügt und die Lösungen 16 Stunden stehen gelassen.
Die erhaltenen Chrom(III)-Werte in den Filtraten sind in der anliegenden graphischen Darstellung aufgetragen und zu Kurven konstanten pH-Wertes zusammengefaßt.

Ergebnis :

Bei pH-Werten unter 9 lassen sich Chrom-Werte von unter 1 mg/l durch Fällungstemperaturen oberhalb 40°C sicher erreichen.

Beispiel 50

Das Vorgehen von Beispiel 1 wurde mit der gleichen Lösung wie in Beispiel 1 wiederholt bis zu dem Punkt, wo in Beispiel 1 das Fällungshilfsmittel zugegeben worden war. Stattdessen wurden nunmehr 0.2 g $Fe^{2+}$ als $FeSO_4$-Lösung zugesetzt, eine weitere Stunden nachgerührt, das Fällungsmhilfsmittel Praestol 335 FL in einer Menge von 3 ppm hinzugesetzt und anschließend sofort filriert. Der Chromgehalt im Filtrat betrug 0,14 mg/l.

Beispiel 51

1 l der in Beispiel 1 verwendeten Lösung wurde unter Rühren bei 60°C mit einer wäßrigen Aufschlämmung von Magnesiumoxid (bei 570°C calciniert) versetzt, bis nach etwa 60 Minuten ein pH-Wert 8,2 erreicht war. Nach einer weiteren Stunden Nachrührzeit wurden 0,2 g $Fe^{2+}$ in Form einr $FeSO_4$-Lösung hinzugefügt, noch 1 Stunde an der Luft nachgerührt, sodann 3 ppm eines schwach anionischen Fällungsmilfsmittels hinzugefügt und 16 Stunden stehen gelassen. Die filtrierte Lösung wies nach dieser Zeit den pH-Wert 8,0 und einen Chromgehalt von 0,03 mg/l auf.

Beispiel 52

Das Vorgehen von Beispiel 51 wurde wiederholt mit der Abänderung, daß der pH-Wert während der Fällung des Chromhydroxids auf 9,0 gehalten wurde. Nach der beschriebenen Prozedur betrug der Chromgehalt im Filtrat 0,04 mg/l.

Beispiel 53

Eine Gerberei-Restflotte aus einer Möbelleder-Gerbung mit hochauszehrendem, selbstbasifizierendem Gerbstoff wies einen pH-Wert 4,0 und einen Gesamtschromgehalt von 0,88 g/l sowie einen durch Natriumbisulfid-Zusatz noch nicht vollständig vernichteten Anteil an Bleichmittel (eingesetzte Chemikalie : $NaClO_2$) auf.

12

Wurde 1 l dieser Restflotte in der in Beispiel 1 beschriebenen Weise bei 60°C und pH 8,5 behandlet, so wies das nach 16 Stunden Absitzen gewonnene Filtrat einen Chrom(III)-Gehalt von 0,6 mg/l und einen Chrom(VI)-Gehalt von 2,9 mg/l auf. Zu diesem Filtrat wurden 0,2 g Fe$^{2+}$ als FeSO$_4$-Lösung bei 50°C hinzugefügt, die Reaktionsmischung 1 Stunde gerührt und sodann mit 5 ppm eines schwach anionischen Fällungshilfsmittels versetzt und nach 13 Stunden filtriert. Chrom(VI) war nicht mehr nachweisbar (< 0,01 mg/l), Chrom(III) war mit 0,05 mg/l enthalten.

## Patentansprüche

1. Verfahren zur Ausfällung von Chrom aus Gerbflotten, die neben Chrom auch aus Chrom maskierende und komplexierende, monofunktionelle oder polyfunktionelle Carbonsäuren enthalten, zu einem wiederverwertbaren, chromreichen, im wesentlichen aus Chrom(III)-hydroxid bestehenden Präzipitat, dadurch gekennzeichnet, daß die Fällung bei pH 8,2 bis 9,0, vorzugsweise bei pH 8,3 bis 8,7, mit Magnesiumoxid oder Magnesiumhydroxid als Alkalisierungsmittel aus mindestens 50°C und nicht oberhalb 60°C heißen Lösungen vorgenommen wird und das Chrom-enthaltende Präzipitat durch Filtration von der nunmehr weniger als 1 mg/l Chrom(III)-enthaltenden Lösung abgetrennt wird.

2. Verfahren nach Anspruch 1, dadurch gekennzeichnet, daß zusätzlich Flockungs- und/oder Filtrationsmittel eingesetzt werden.

## Claims

1. A process for the precipitation of chromium from tanning liquors which, in addition chromium, also contain chromium-masking and complexing, monofunctional or polyfunctional carboxylic acids to form a reuseable, chromium-rich precipitate consisting essentially of chromium(III) hydroxide, characterized in that the precipitation is carried out from solutions having a temperature of at least 50°C and no more than 60°C and at pH 8.2 to 9.0 and preferably at pH 8.3 to 8.7 using magnesium oxide or magnesium hydroxide as alkalizing agent and the chromium-containing precipitate is separated by filtration from the solution now containing less than 1 mg/l chromium(III).

2. A process as claimed in claim 1, characterized in that flocculation and/or filtration aids are additionally used.

## Revendications

1. Procédé pour précipiter le chrome contenu dans des bains de tannerie contenant également des acides carboxyliques mono-fonctionnels ou poly-fonctionnels qui séquestrent et complexent le brome, a l'état de précipité riche en chrome, consistant essentiellement en hydroxyde de chrome-III et réutilisable, caractérisé en ce que l'on précipite à un pH de 8,2 à 9,0, de préférence de 8,3 à 8,7, en utilisant l'oxyde de magnésium ou l'hydroxyde de magnésium en tant qu'agent alcalinisant, des solutions portées à au moins 50°C et à 60°C au maximum, et on sépare le précipité contenant le chrome par filtration de la solution dont la teneur en chrome-III est alors inférieure à 1 mg/l.

2. Procédé selon la revendication 1, caractérisé en ce que l'on utilise en outre des produits auxiliaires de floculation et/ou de filtration.